# EUROPÄISCHE PATENTSCHRIFT

(11) **EP 3 384 177 B1**
(45) Veröffentlichungstag und Bekanntmachung des Hinweises auf die Patenterteilung: **23.10.2019**
(21) Anmeldenummer: 16798170.3
(22) Anmeldetag: 18.11.2016
(51) Int. Cl.: F16F 9/32, F16F 9/18, F16F 9/49

(54) **SCHWINGUNGSDÄMPFER MIT HYDRAULISCHER DÄMPFUNG DES DRUCKSTUFENANSCHLAGES**
VIBRATION DAMPER WITH HYDRAULIC DAMPING OF THE PRESSURE STAGE IMPACT
AMORTISSEUR DE VIBRATIONS À AMORTISSEMENT HYDRAULIQUE DE LA BUTÉE D'ÉTAGE DE COMPRESSION

(30) Priorität: 04.12.2015 DE 102015121140
(43) Veröffentlichungstag der Anmeldung: 10.10.2018
(73) Patentinhaber: ThyssenKrupp Bilstein GmbH, 58256 Ennepetal (DE); thyssenkrupp AG, 45143 Essen (DE)
(72) Erfinder: VELTUM, Christian, 58638 Iserlohn (DE); MOLDOVAN, Alexandru-Marcel, 550200 Sibiu (RO); GÖTZ, Ole, 38112 Braunschweig (DE)
(74) Vertreter: thyssenkrupp Intellectual Property GmbH
(86) Internationale Anmeldenummer: PCT/EP2016/078125
(87) Internationale Veröffentlichungsnummer: WO 2017/093046

(56) Entgegenhaltungen:
- EP-A1- 1 621 793
- WO-A1-2015/105791
- US-A- 3 111 201

## Beschreibung

Die vorliegende Erfindung betrifft einen Schwingungsdämpfer mit hydraulischer Dämpfung eines Druckstufenanschlages, aufweisend ein Dämpferrohr und einen im Dämpferrohr in einer Längsachse geführten Arbeitskolben, wobei der Arbeitskolben an einer aus dem Dämpferrohr herausgeführten Kolbenstange aufgenommen ist, und wobei zur Dämpfung des Druckstufenanschlages ein Rohrkörper im Dämpferrohr angeordnet ist, in dem ein Hilfskolben in der Längsachse geführt aufgenommen und mit einem Federelement in Richtung zum Arbeitskolben vorgespannt ist, und wobei ein mit dem Arbeitskolben mitbewegbarer Anschlagkolben vorgesehen ist, der bei einer Einfahrbewegung der Kolbenstange in das Dämpferrohr gegen den Hilfskolben zur Anlage gelangt und gemeinsam mit diesem unter einer hydraulischen Dämpfungswirkung und unter Kompression des Federelementes in den Rohrkörper eintaucht, wodurch ein im Rohrkörper vorhandenes Dämpfungsmittel verdrängt wird und den Hilfskolben und den Anschlagkolben durchströmt.

### STAND DER TECHNIK

Die WO 2015/105791 A1 offenbart einen gattungsbildenden Schwingungsdämpfer mit einer hydraulischen Dämpfung eines Druckstufenanschlages, und der Schwingungsdämpfer weist ein Dämpferrohr und einen im Dämpferrohr in einer Längsachse geführten Arbeitskolben auf. Am Arbeitskolben ist eine Kolbenstange angeordnet, die aus dem Dämpferrohr herausgeführt ist, und mit der Kolbenstange kann der Arbeitskolben in Richtung eines Druckstufenanschlages im Dämpferrohr verschoben werden. Am Arbeitskolben befindet sich in Verlängerung der Kolbenstange angeordnet an einem Kolbenfortsatz ein Anschlagkolben, der bei einer Einfahrbewegung der Kolbenstange in das Dämpferrohr in Richtung zum Druckstufenanschlag mit dem Arbeitskolben mitbewegt werden kann. Im Bodenbereich des Dämpferrohres ist ein Rohrkörper aufgenommen, der sich in Längsachsenrichtung erstreckt und in dem ein Hilfskolben aufgenommen ist, der mit einer Schraubenfeder in Richtung zum Arbeitskolben und insbesondere in Richtung zum Anschlagkolben vorgespannt ist. Wird der Arbeitskolben in Richtung zum Druckstufenanschlag bewegt, gelangt der Anschlagkolben an einer gegebenen Einfahrposition gegen den Hilfskolben zur Anlage, und bei einer weiter fortgesetzten Einfahrbewegung fahren der Anschlagkolben und der Hilfskolben in einer Paketanordnung gemeinsam in den Rohrkörper ein. Dabei wird das Federelement komprimiert, bis schließlich der Hilfskolben vollständig in den Rohrkörper eingefahren ist. Der Rohrkörper ist in einem weiteren Rohrkörper aufgenommen, sodass sich die Einfahrbewegung unter Kompression einer weiteren Schraubenfeder fortsetzt, wobei die beiden Rohrkörper teleskopartig ineinander geschoben werden.

Die Kompression der Schraubenfedern erfolgt im Wesentlichen unter einem linearen Kraftanstieg, und die Dämpfung erfolgt zusätzlich zur Kompressionskraft der Schraubenfedern durch ein Durchströmen des Anschlagkolbens mit einem Dämpfungsmittel. Im Anschlagkolben sind Strömungskanäle eingebracht, durch die das Dämpfungsmittel beim Einfahren in den Rohrkörper hindurchströmt, und die Strömungskanäle sind mit Ventilfederscheiben abgedeckt, sodass eine Dämpfungswirkung mit einer entsprechenden Kennung über ein Auffedern der Ventilfederscheiben erzeugt wird.

Durch den Anschlag des Anschlagkolbens an den Hilfskolben und durch den begrenzten Federweg der ersten Schraubenfeder im ersten Rohrkörper erfolgt ein sprunghaftes Mitbewegen des ersten Rohrkörpers zum teleskopartigen Einschub in den zweiten Rohrkörper, sodass im Ergebnis ein Kraft-Weg-Verlauf mit einer Stufenform erzeugt wird. Wünschenswert wäre jedoch vielmehr eine Kennung des Druckstufenanschlages mit einer im Wesentlichen kontinuierlichen Erhöhung der Dämpfungskraft bis zum endgültigen Anschlag der Druckstufe.

### OFFENBARUNG DER ERFINDUNG

Aufgabe der Erfindung ist die Weiterbildung eines Schwingungsdämpfers mit hydraulischer Dämpfung eines Druckstufenanschlages, wobei eine möglichst stufenfreie Dämpfungskrafterhöhung bis zum endgültigen Anschlag in der Druckstufe erreicht werden soll. Dabei soll der konstruktive Aufwand möglichst minimal sein.

Diese Aufgabe wird ausgehend von einem Schwingungsdämpfer gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass im Rohrkörper wenigstens eine Strömungsquerschnittsgeometrie ausgebildet ist, durch die das Dämpfungsmittel parallel zur Durchströmung des Anschlagkolbens aus dem Rohrköper strömt, wenn der Hilfskolben und der Anschlagkolben gemeinsam in den Rohrkörper einfahren, wobei die Strömungsquerschnittsgeometrie so ausgebildet ist, dass sich der Strömungsquerschnitt mit zunehmendem Einfahrweg verkleinert.

Kern der Erfindung ist zunächst die Beibehaltung der Anordnung eines Anschlagkolbens an der Kolbenstange und die Anordnung eines Rohrkörpers mit einem im Rohrkörper geführten Hilfskolben, sodass die Weichkennung mittels einer entsprechenden Beplattung des Anschlagkolbens mit Ventilfederscheiben auf einfache Weise eingestellt werden kann. Aufgrund der gleichbleibenden Kennung des Anschlagkolbens unabhängig von der Eintauchtiefe in den Rohrkörper sieht die Erfindung die Strömungsquerschnittsgeometrie vor, durch die das Dämpfungsmittel parallel zur Durchströmung des Anschlagkolbens aus dem Rohrkörper strömen kann. Abhängig von der Einfahrtiefe des Hilfskolbens gemeinsam mit dem Anschlagkolben verändert sich die Strömungsquerschnittsgeometrie, in der Weise, dass der verbleibende Strömungsquerschnitt mit zunehmender Eintauchtiefe des Anschlagkolbens gemeinsam mit dem Hilfskolben abnimmt. Im Ergebnis ergibt sich eine kontinuierliche oder quasi-kontinuierliche Erhöhung der Dämpfungskraft des Druckstufenanschlages, wobei bei vollständig geschlossener Strömungsquerschnittsgeometrie im Rohrkörper ein verbleibender Restquerschnitt durch den Anschlagkolben gebildet ist. Folglich kann der Anschlagkolben mit einer entsprechend härteren Kennung ausgeführt werden, da nach Art eines Bypasses das Dämpfungsmittel durch die Strömungsquerschnittsgeometrie aus dem Rohrkörper parallel zur Durchströmung des Anschlagkolbens abfließen kann.

Im Ergebnis ergibt sich eine Glättung der Treppenstufencharakteristik des Kraftverlaufes des Druckstufenanschlages über dem Einfahrweg, wobei der konstruktive Aufwand durch die einfache Einbringung der Strömungsquerschnittsgeometrie in den Rohrkörper zur Erzeugung eines entsprechenden Druckstufenanschlages nicht wesentlich erhöht wird.

Gemäß einer ersten Ausführungsform der Strömungsquerschnittsgeometrie ist diese mittels wenigstens einer Lochreihe aus einer Vielzahl von die Wandung des Rohrkörpers durchsetzenden Löchern gebildet. Dabei erstreckt sich die Lochreihe in der Wandung des Rohrkörpers mit besonderem Vorteil in der bzw. parallel zur Längsachse. Fährt der Anschlagkolben gemeinsam mit dem Hilfskolben in den Rohkörper ein, so reduziert sich mit fortschreitender Eintauchtiefe des Kolbens die Anzahl der verbleibenden Löcher der Lochreihe, durch die das Dämpfungsmittel aus dem Rohrkörper herausgedrückt werden kann. Je geringer die Anzahl an verbleibenden Löchern ist, desto größer wird der Strömungswiderstand, und desto höher sind die Dämpfungskräfte. Auf diese einfache Weise wird die Dämpfungskraft allein durch die Bewegung der Kolben innerhalb des Rohrkörpers gesteuert, wobei eine zunehmende Eintauchtiefe der Kolben in den Rohrkörper grundsätzlich zu einer erhöhten Dämpfungskraft führt. Fahren die Kolben aus dem Rohrkörper wieder heraus, so gelangt das Dämpfungsmittel durch den Anschlagkolben und durch die in ihrer Anzahl wieder anwachsenden Löcher der Lochreihe wieder zurück in den Innenbereich des Rohrkörpers.

Mit weiterem Vorteil sind die Löcher der Lochreihe zueinander gleich ausgebildet oder es ist vorgesehen, dass die Löcher der Lochreihe in Längsachsenrichtung aufeinanderfolgend einen sich ändernden Querschnitt aufweisen oder zueinander unterschiedliche Abstände aufweisen. Dadurch muss die Änderung des verbleibenden Ausströmquerschnittes für das Dämpfungsmittel aus dem Innenbereich des Rohrkörpers bei weiter einfahrendem Kolben nicht zwingend linear erfolgen, sodass ein progressiver oder degressiver Anstieg der Dämpfungskraft über die Geometrie, die Anzahl und/oder die Abstände der Löcher zueinander eingestellt werden kann.

Mit noch weiterem Vorteil können auf dem Umfang des Rohrkörpers verteilt mehrere Lochreihen vorgesehen sein, wobei der Rohrkörper vorzugsweise derart mit Lochreihen ausgeführt ist, dass eine Art Lochgitter-Rohrkörper entsteht.

Gemäß einer weiteren möglichen Ausführungsform zur Bildung der Strömungsquerschnitte können diese mittels wenigstens einer querschnittsveränderlichen Nut in der Innenwand des Rohrkörpers gebildet sein. Ähnlich wie bei in einer Lochreihe ausgebildeten Löchern kann auch die Querschnittsänderung einer Strömungsnut in der Innenwand des Rohrkörpers dazu genutzt werden, mit sich ändernder Eintauchtiefe der Kolben in den Rohrkörper eine verbleibende Abströmgeometrie für das Dämpfungsmittels aus dem Innenbereich des Rohrkörpers zu verändern. Je kleiner die Nut wird, die mit dem Hilfskolben eine geschlossene Querschnittskontur bildet, desto höher wird die Dämpfungskraft, sodass die Nut in Richtung einer fortschreitenden Eintauchtiefe des Hilfskolbens kleiner wird. Insbesondere können mehrere Nuten über dem Umfang des Rohrkörpers verteilt in der Innenwand eingebracht sein.

Beispielsweise wird damit die querschnittsveränderliche Nut in der Innenwand des Rohrkörpers zu einem freien Ende des Rohrkörpers hin tiefer und/oder breiter. Alternativ kann auch die Anzahl von Nuten in der Innenwand des Rohrkörpers sich über der Rohrlängsrichtung verändern.

Der Schwingungsdämpfer weist gemäß einer bevorzugten Ausführungsform ein Bodenventil auf, das im bodenseitigen Aufnahmebereich des Rohrkörpers angeordnet ist. Zudem ist vorzugsweise vorgesehen, dass der Rohrkörper zum Bodenventil hin geschlossen ausgebildet ist und dass das Bodenventil aus einem umlaufenden Spalt zwischen dem Rohrkörper und dem Dämpferrohr mit einem Dämpfungsmittel anströmbar ist. Mit besonderem Vorteil ist der Schwingungsdämpfer als Zweirohrdämpfer mit einem Innenrohr und mit einem Außenrohr ausgebildet, wobei das Innenrohr das vorstehend aufgeführte Dämpferrohr bildet.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Querschnittsansicht eines Schwingungsdämpfers mit einer hydraulischen Dämpfung des Druckstufenanschlages,
- Figur 2: eine perspektivische Darstellung des Rohrkörpers mit einer Strömungsquerschnittsgeometrie, die durch eine Reihe von Löchern gebildet ist und
- Figur 3: eine perspektivische Darstellung des Rohrkörpers mit einer Strömungsquerschnittsgeometrie, die durch eine querschnittsver-änderliche Nut gebildet ist.

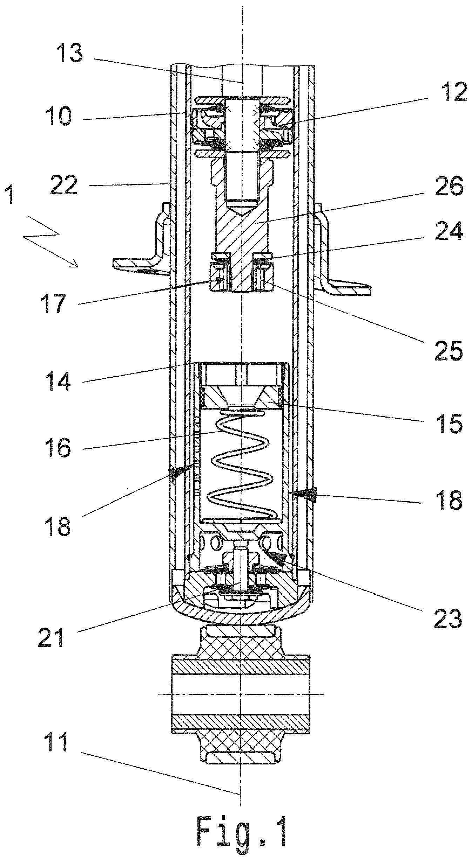

Figur 1 zeigt in einer quergeschnittenen Ansicht einen Schwingungsdämpfer 1 mit einem Dämpferrohr 10 und mit einem im Dämpferrohr 10 in einer Längsachse 11 geführten Arbeitskolben 12. Der Arbeitskolben 12 ist an einer aus dem Dämpferrohr 10 herausgeführten Kolbenstange 13 aufgenommen, wobei zur Dämpfung des Druckstufenanschlages ein Rohrkörper 14 im Dämpferrohr 10 angeordnet ist. Im Rohrkörper 14 ist ein Hilfskolben 15 eingebracht, der ringförmig ausgebildet ist und einen mittigen Durchgang aufweist. Zwischen dem Hilfskolben 15 und dem Bodenbereich des Rohrkörpers 14 ist ein Federelement 16 vorgespannt eingesetzt, wobei das Federelement 16 durch eine Schraubenfeder gebildet ist. Das Federelement 16 spannt dabei den Hilfskolben 15 gegen einen Anschlag am freien Ende des Rohrkörpers 14 vor, sodass der Hilfskolben 15 zum Arbeitskolben 12 hin vorgespannt ist.

Der Rohrkörper 14 weist einen geschlossenen Bodenbereich auf, wobei unterhalb des Bodenbereiches Strömungsöffnungen 23 eingebracht sind, durch die ein unterhalb des Rohrkörpers 14 angeordnetes Bodenventil 21 anströmbar ist. Die Anströmung erfolgt über einen Ringspalt zwischen der Außenseite des Rohrkörpers 14 und der Innenseite des Dämpferrohrs 10, sodass das Dämpfungsmittel aus dem Ringspalt durch die Strömungsöffnungen 23 im unteren Absatz des Rohrkörpers 14 zum Bodenventil 21 strömen kann. Der Schwingungsdämpfer 1 ist als Zweirohr-Dämpfer ausgebildet und weist ein Innenrohr auf, das durch das Dämpferrohr 10 gebildet ist und das Dämpferrohr 10 ist durch ein Außenrohr 22 umhüllt. Der Ringspalt zwischen den beiden Rohren 10 und 22 kann mit dem Innenbereich des Dämpferrohres 10 somit über das Bodenventil 21 fluidisch kommunizieren.

Am Arbeitskolben 12 ist ein Kolbenfortsatz 26 angeordnet, an dem endseitig ein Anschlagkolben 17 angeordnet ist. Der Anschlagkolben 17 weist Strömungskanäle 25 auf, die sich axial erstrecken und die Strömungskanäle 25 sind oberseitig mit Ventilfederscheiben 24 abgedeckt.

Wird die Kolbenstange 13 in der Druckstufe in das Dämpferrohr 10 eingefahren, so verfährt der Anschlagkolben 17 gemeinsam mit dem Arbeitskolben 12 in Richtung zum Rohrkörper 14. An einer vorgegebenen Eintauchtiefe der Kolbenstange 13 in das Dämpferrohr 10 gelangt der Anschlagkolben 17 stirnseitig gegen den Hilfskolben 15 zur Anlage. Bei einer fortgeführten Eintauchbewegung verfahren anschließend der Anschlagkolben 17 gemeinsam mit dem Hilfskolben 15 in einer Paketanordnung in den Rohrkörper 14 hinein und verdrängen ein im Rohrkörper 14 aufgenommenes Dämpfungsmittel, beispielsweise ein Dämpferöl. Durch die Verdrängung des Dämpfungsmittels aus dem Rohrkörper 14 durchströmt dieses den offenen Innenbereich des Hilfskolbens 15 und die Strömungskanäle 25 des Anschlagkolbens 17, die den Anschlagkolben 17 in Längsachsenrichtung entsprechend der Längsachse 11 durchsetzen. Oberseitig weist der Anschlagkolben 17 Ventilfederscheiben 24 auf, die mit einer Weichkennung ausgeführt sind und ein Durchströmen des Anschlagkolbens 17 mit dem Dämpfungsmittel aus dem Rohrkörper 14 zulassen.

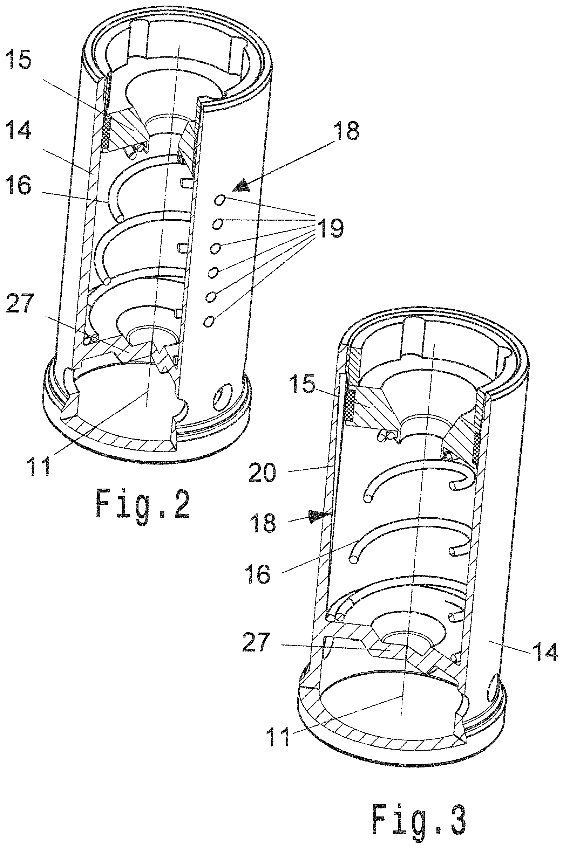

Zusätzlich zur Durchströmung des Anschlagkolbens 17 gelangt das Dämpfungsmittel aus dem Rohrkörper 14 über in den Rohrkörper 14 eingebrachte Strömungsquerschnittsgeometrien 18 aus dem Innenbereich. Die Strömungsquerschnittsgeometrien 18 sind auf verschiedene Weise ausgeführt, wie mit den Beispielen der folgenden Figuren 2 und 3 näher erläutert.

Figur 2 zeigt eine perspektivische Ansicht des Rohrkörpers 14 mit dem im Rohrkörper 14 geführt aufgenommenen Hilfskolben 15. Dieser ist in einer oberen Endlage vorgespannt durch ein Federelement 16, das sich zwischen einem Bodenbereich 27 des Rohrkörpers 14 und dem Hilfskolben 15 vorgespannt erstreckt und als Schraubenfeder ausgeführt ist.

In der Wandung des Rohrkörpers 14 ist beispielhaft eine Lochreihe 19 aus mehreren Löchern eingebracht, die eine Strömungsquerschnittsgeometrie 18 zum Ablauf von Dämpfungsmittel bilden, das im Rohrkörper 14 eingebracht ist. Dabei ist lediglich eine Lochreihe 19 gezeigt, wobei auf dem Umfang des Rohrkörpers verteilt auch mehrere Lochreihen 19 eingebracht sein können. Die Lochreihe 19 erstreckt sich entlang der Längsachse 11 des Rohrkörpers 14, die mit der Längsachse 11 des Schwingungsdämpfers 1 zusammenfällt.

Wird der Hilfskolben 15 durch das Einfahren des Anschlagkolbens 17 entlang der Längsachse 11 in den Rohrkörper 14 eingefahren, sodass sich der Hilfskolben 15 dem Bodenbereich 27 nähert, so wird das Federelement 16 komprimiert, wobei das im Rohrkörper 14 aufgenommene Dämpfungsmittel durch die Löcher der Lochreihe 19 abströmt. Durch das innenseitige Überstreifen des Hilfskolbens 15 über die Lochreihe 19 wird die Anzahl der Löcher mit weiterem Einfahren des Hilfskolbens 15 in den Rohrkörper 14 verringert, wodurch sich der Gesamt-Strömungswiderstand zum Abströmen des Dämpfungsmittels aus dem Rohrkörper 14 erhöht, und wodurch auch eine Erhöhung der Dämpfungskraft des Druckstufenanschlages erreicht wird.

Figur 3 zeigt ein weiteres Ausführungsbeispiel des Rohrkörpers 14 mit einer Strömungsquerschnittsgeometrie 18, die durch eine querschnittsveränderliche Nut 20 in der Innenwand des Rohrkörpers 14 ausgebildet ist. Wird der Hilfskolben 15 unter Kompression des Federelementes 16 entlang der Längsachse 11 in Richtung zum Bodenbereich 27 bewegt, so ändert sich der zwischen der Außenseite des Hilfskolbens 15 und der eingebrachten Nut 20 verbleibende Strömungsquerschnitt aufgrund der Querschnittsänderung der Nut 20 selbst. Durch die Verkleinerung der Nut 20 in Richtung zum Bodenbereich 27 verkleinert sich auch der verbleibende Strömungsquerschnitt, wodurch sich der Strömungswiderstand zum Abströmen des Dämpfungsmittels aus dem Innenbereich des Rohrkörpers 14 erhöht. Dadurch geht ebenfalls eine Erhöhung der hydraulischen Dämpfungskraft in der Druckstufe einher, wenn die Kolbenstange 13 tiefer in das Dämpferrohr 10 eingefahren wird, um eine entsprechende Dämpfungswirkung zu erzielen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Schwingungsdämpfer

- 10: Dämpferrohr
- 11: Längsachse
- 12: Arbeitskolben
- 13: Kolbenstange
- 14: Rohrkörper
- 15: Hilfskolben
- 16: Federelement
- 17: Anschlagkolben
- 18: Strömungsquerschnittsgeometrie
- 19: Lochreihe
- 20: Nut
- 21: Bodenventil
- 22: Außenrohr
- 23: Strömungsöffnung
- 24: Ventilfederscheibe
- 25: Strömungskanal
- 26: Kolbenfortsatz
- 27: Bodenbereich

## Patentansprüche

1. Schwingungsdämpfer (1) mit hydraulischer Dämpfung eines Druckstufenanschlages, aufweisend ein Dämpferrohr (10) und einen im Dämpferrohr (10) in einer Längsachse (11) geführten Arbeitskolben (12), wobei der Arbeitskolben (12) an einer aus dem Dämpferrohr (10) herausgeführten Kolbenstange (13) aufgenommen ist, und wobei zur Dämpfung des Druckstufenanschlages ein Rohrkörper (14) im Dämpferrohr (10) angeordnet ist, in dem ein Hilfskolben (15) in der Längsachse (11) geführt aufgenommen und mit einem Federelement (16) in Richtung zum Arbeitskolben (12) vorgespannt ist, und wobei ein mit dem Arbeitskolben (12) mitbewegbarer Anschlagkolben (17) vorgesehen ist, der bei einer Einfahrbewegung der Kolbenstange (13) in das Dämpferrohr (10) gegen den Hilfskolben (15) zur Anlage gelangt und gemeinsam mit diesem unter einer hydraulischen Dämpfungswirkung und unter Kompression des Federelementes (16) in den Rohrkörper (14) eintaucht, wodurch ein im Rohrkörper (14) vorhandenes Dämpfungsmittel verdrängt wird und den Hilfskolben (15) und den Anschlagkolben (17) durchströmt,
**dadurch gekennzeichnet, dass** im Rohrkörper (14) wenigstens eine Strömungsquerschnittsgeometrie (18) ausgebildet ist, durch die das Dämpfungsmittel parallel zur Durchströmung des Anschlagkolbens (17) aus dem Rohrkörper (14) strömt, wenn der Hilfskolben (15) und der Anschlagkolben (17) gemeinsam in den Rohrkörper (14) einfahren, wobei die Strömungsquerschnittsgeometrie (18) so ausgebildet ist, dass sich der Strömungsquerschnitt mit zunehmendem Einfahrweg verkleinert.

2. Schwingungsdämpfer (1) nach Anspruch 1, **dadurch gekennzeichnet, dass** die Strömungsquerschnittsgeometrie (18) mittels wenigstens einer Lochreihe (19) aus einer Vielzahl von die Wandung des Rohrkörpers (14) durchsetzenden Löchern gebildet ist.

3. Schwingungsdämpfer (1) nach Anspruch 2, **dadurch gekennzeichnet, dass** sich die Lochreihe (19) in der Wandung des Rohrkörpers (14) in der Längsachse (11) erstreckt.

4. Schwingungsdämpfer (1) nach Anspruch 2 oder 3, **dadurch gekennzeichnet, dass** die Löcher der Lochreihe (19) zueinander gleich ausgebildet sind oder dass die Löcher der Lochreihe (19) in Längsachsenrichtung aufeinanderfolgend einen sich ändernden Querschnitt aufweisen oder zueinander unterschiedliche Abstände aufweisen.

5. Schwingungsdämpfer (1) nach einem der Ansprüche 2 bis 4, **dadurch gekennzeichnet, dass** auf dem Umfang des Rohrkörpers (14) verteilt mehrere Lochreihen (19) vorgesehen sind.

6. Schwingungsdämpfer (1) nach Anspruch 1, **dadurch gekennzeichnet, dass** die Strömungsquerschnittsgeometrie (18) mittels wenigstens einer querschnittsveränderlichen Nut (20) in der Innenwand des Rohrkörpers (14) gebildet ist.

7. Schwingungsdämpfer (1) nach Anspruch 6, **dadurch gekennzeichnet, dass** die querschnittsveränderliche Nut (20) in der Innenwand des Rohrkörpers (14) zu einem freien Ende des Rohrkörpers (14) hin tiefer und/oder breiter werdend ausgebildet ist.

8. Schwingungsdämpfer (1) nach einem der vorgenannten Ansprüche, **dadurch gekennzeichnet, dass** ein Bodenventil (21) vorgesehen ist, das im bodenseitigen Aufnahmebereich des Rohrkörpers (14) angeordnet ist.

9. Schwingungsdämpfer (1) nach Anspruch 8, **dadurch gekennzeichnet, dass** der Rohrkörper (14) zum Bodenventil (21) hin geschlossen ausgebildet ist und dass das Bodenventil (21) aus einem umlaufenden Spalt zwischen dem Rohrkörper (14) und dem Dämpferrohr (10) mit dem Dämpfungsmittel anströmbar ist.

10. Schwingungsdämpfer (1) nach einem der vorgenannten Ansprüche, **dadurch gekennzeichnet, dass** der Schwingungsdämpfer (1) als Zweirohrdämpfer mit einem Innenrohr und mit einem Außenrohr (22) gebildet ist, wobei das Innenrohr das Dämpferrohr (10) bildet.

## Claims

1. Vibration damper (1) with hydraulic damping of a pressure stage stop, comprising a damper tube (10) and a working piston (12) guided in the damper tube (10) along a longitudinal axis (11), wherein the working piston (12) is accommodated on a piston rod (13) leading out of the damper tube (10) and wherein, for damping the pressure stage stop, a tubular body (14) is arranged in the damper tube (10), in which an auxiliary piston (15) is accommodated such that it is guided along the longitudinal axis (11) and in which this auxiliary piston is pre-stressed in the direction towards the working piston (12) by a spring element (16), and wherein a stop piston (17) which is movable with the working piston (12) is provided, which, upon a drive-in movement of the piston rod (13) into the damper tube (10), comes to lie against the auxiliary piston (15) and, together with this, plunges into the tubular body (14) under a hydraulic damping effect and under compression of the spring element (16), whereby a damping agent present in the tubular body (14) is displaced and flows through the auxiliary piston (15) and the stop piston (17), **characterized in that** at least one flow cross-section geometry (18) is formed in the tubular body (14), through which the damping agent flows out of the tubular body (14) parallel to the throughflow through the stop piston (17) when the auxiliary piston (15) and the stop piston (17) drive into the tubular body (14) together, wherein the flow cross-section geometry (18) is formed such that the flow cross-section becomes smaller as the drive-in path increases.

2. Vibration damper (1) according to Claim 1, **characterized in that** the flow cross-section geometry (18) is formed by means of at least one row of holes (19) comprising a plurality of holes passing through the wall of the tubular body (14).

3. Vibration damper (1) according to Claim 2, **characterized in that** the row of holes (19) in the wall of the tubular body (14) extends along the longitudinal axis (11).

4. Vibration damper (1) according to Claim 2 or 3 **characterized in that** the holes of the row of holes (19) are formed identically to one another or **in that**, successively in the direction of the longitudinal axis, the holes of the row of holes (19) comprise a varying cross-section or are at different spacings from one another.

5. Vibration damper (1) according to one of Claims 2 to 4, **characterized in that** a plurality of rows of holes (19) are provided, distributed over the circumference of the tubular body (14).

6. Vibration damper (1) according to Claim 1, **characterized in that** the flow cross-section geometry (18) is formed by means of at least one cross-sectionally varying groove (20) in the inside wall of the tubular body (14).

7. Vibration damper (1) according to Claim 6, **characterized in that** the cross-sectionally varying groove (20) in the inside wall of the tubular body (14) is designed such that it becomes deeper and/or wider towards a free end of the tubular body (14).

8. Vibration damper (1) according to one of the preceding claims, **characterized in that** a bottom valve (21) is provided, which is arranged in the bottom accommodating region of the tubular body (14) .

9. Vibration damper (1) according to Claim 8, **characterized in that** the tubular body (14) is designed such that it is closed towards the bottom valve (21) and **in that** the bottom valve (21) is inflowable by the damping agent from a circumferential gap between the tubular body (14) and the damper tube (10).

10. Vibration damper (1) according to one of the preceding claims, **characterized in that** the vibration damper (1) is formed as a twin-tube damper with an inner tube and with an outer tube (22), wherein the inner tube forms the damper tube (10).

## Revendications

1. Amortisseur de vibrations (1) à amortissement hydraulique d'une butée d'étape de compression, l'amortisseur de vibrations comprenant un tube d'amortisseur (10) et un piston de travail (12) guidé dans le tube d'amortisseur (10) suivant un axe longitudinal (11), le piston de travail (12) étant reçu au niveau d'une tige de piston (13) qui sort du tube d'amortisseur (10), et un corps tubulaire (14) étant disposé dans le tube d'amortisseur (10) pour amortir la butée d'étape de pression, corps tubulaire dans lequel un piston auxiliaire (15) est reçu en étant guidé suivant l'axe longitudinal (11) et est précontraint par un élément à ressort (16) en direction du piston de travail (12), et un piston de butée (17) étant prévu qui peut être déplacé conjointement avec le piston de travail (12) et qui, lors d'un mouvement de rétraction de la tige de piston (13) dans le tube d'amortisseur (10) vient en appui contre le piston auxiliaire (15) et pénètre conjointement avec celui-ci dans le corps tubulaire (14) en raison de l'amortissement hydraulique et de la compression de l'élément à ressort (16), ce qui permet de déplacer un agent d'amortissement présent dans le corps tubulaire (14) et de le faire s'écouler à travers le piston auxiliaire (15) et le piston de butée (17), **caractérisé en ce qu'**au moins une géométrie d'écoulement en coupe transversale (18) est formée dans le corps tubulaire (14), à travers laquelle l'agent d'amortissement s'écoule hors du corps tubulaire (14) parallèlement à l'écoulement à travers le piston de butée (17), lorsque le piston auxiliaire (15) et le piston de butée (17) se rétractent conjointement dans le corps tubulaire (14), la géométrie d'écoulement en coupe transversale (18) étant formée de manière à réduire la section transversale d'écoulement à mesure que le trajet de rétraction augmente.

2. Amortisseur de vibrations (1) selon la revendication 1, **caractérisé en ce que** la géométrie d'écoulement en coupe transversale (18) est formée au moyen d'au moins une rangée de trous (19) formée d'une pluralité de trous traversant la paroi du corps tubulaire (14).

3. Amortisseur de vibrations (1) selon la revendication 2, **caractérisé en ce que** la rangée de trous (19) ménagée dans la paroi du corps tubulaire (14) s'étend suivant l'axe longitudinal (11).

4. Amortisseur de vibrations (1) selon la revendication 2 ou 3, **caractérisé en ce que** les trous de la rangée de trous (19) sont conçus pour être identiques les uns aux autres ou **en ce que** les trous de la rangée de trous (19) ont une section variable ou des distances différentes les uns par rapport aux autres successivement dans la direction de l'axe longitudinal.

5. Amortisseur de vibrations (1) selon l'une des revendications 2 à 4, **caractérisé en ce qu'**une pluralité de rangées de trous (19) sont prévues qui sont réparties sur la circonférence du corps tubulaire (14).

6. Amortisseur de vibrations (1) selon la revendication 1, **caractérisé en ce que** la géométrie d'écoulement en coupe transversale (18) est formée au moyen d'au moins une gorge à section transversale variable (20) ménagée dans la paroi intérieure du corps tubulaire (14).

7. Amortisseur de vibrations (1) selon la revendication 6, **caractérisé en ce que** la gorge à section transversale variable (20) ménagée dans la paroi intérieure du corps tubulaire (14) est formée de manière à devenir plus profonde et/ou plus large en direction d'une extrémité libre du corps tubulaire (14).

8. Amortisseur de vibrations (1) selon l'une des revendications précédentes, **caractérisé en ce qu'**une soupape de fond (21) est prévue qui est disposée dans la zone de réception côté fond du corps tubulaire (14).

9. Amortisseur de vibrations (1) selon la revendication 8, **caractérisé en ce que** le corps tubulaire (14) est conçu pour être fermé en direction de la soupape de fond (21) et **en ce que** l'agent d'amortissement peut s'écouler vers la soupape de fond (21) depuis un intervalle circonférentiel ménagé entre le corps tubulaire (14) et le tube d'amortisseur (10).

10. Amortisseur de vibrations (1) selon l'une des revendications précédentes, **caractérisé en ce que** l'amortisseur de vibrations (1) est formé comme un amortisseur à deux tubes comportant un tube intérieur et un tube extérieur (22), le tube intérieur formant le tube d'amortisseur (10).
